# EUROPEAN PATENT APPLICATION

(11) **EP 3 858 141 A1**
(43) Date of publication of application: **04.08.2021**
(21) Application number: 19797544.4
(22) Date of filing: 25.09.2019
(51) Int. Cl.: A01N 63/20, A01P 3/00, A01P 5/00, A01P 21/00

(54) **SOLID COMPOSITION FOR AGRICULTURAL AND VETERINARY USE**

(30) Priority: 27.09.2018 CU 20180117
(71) Applicant: Centro de Ingeniería Genética y Biotecnología, La Habana 11600 (CU)
(72) Inventor: GONZALEZ FERNANDEZ, Nemecio, Camagüey 70100 (CU); MORÁN VALDIVIA, Rolando, Camagüey 70100 (CU); PEREZ HEREDIA, Carlos, Camagüey 70100 (CU); PANEQUE DIAZ, Yunier, Camagüey 70100 (CU); WONG PADILLA, Idania, Camagüey 70100 (CU); SÁNCHEZ ORTIZ, Ileana, Camagüey 70100 (CU); MORA GONZÁLEZ, Néstor, Camagüey 70100 (CU); FRANCO RODRÍGUEZ, Ramón, Camagüey 70100 (CU); SOMONTES SANCHEZ, Danalay, Camagüey 70100 (CU); MENA CAMPOS, Jesús, La Habana 11400 (CU); GONZALEZ BLANCO, Sonia, La Habana 11600 (CU)
(74) Representative: V.O.
(86) International application number: PCT/CU2019/050008
(87) International publication number: WO 2020/064029

(57) **Abstract**

Solid composition for agricultural or veterinary use comprising a mixture of bacterial concentrate of the strain C-924 and a commercially available culture medium or organic amendment, an antifoaming substance, sucrose, and having less than 12% residual moisture. The components of the formulation allow an adequate wettability of the solid final product, and its prolonged stability at storage temperature of 2 to 8 °C. The invention discloses the use of the solid composition in the control of pathogens of plants and animals, and in the stimulation of seed germination and plant growth.

## Description

### Technical Field

The present invention relates to the field of agricultural biotechnology, in particular to the application of compositions of biopesticides and microbial biofertilizers more efficient, able to protect plants and animals, without affecting the environment.

### Prior art

The problems associated to the use of chemicals in agriculture, and the negative impacts they have on health and the environment, increase continuously. On the other hand, in plant pathogens resistance is developed. All this increases the interest in the use of beneficial microorganisms, to improve crop yields and increase production. In this way, the consumption of food becomes more secure and the environment is protected.

There are numerous microorganisms in the soil with potential as biocontrollers that have been included in different practices of integrated pest management and improvement of agricultural productivity (Avis et al., (2008) Soil Biology & Biochemistry 40, 1733-1740).

Several microorganisms that exhibit potent biocontrol activity against certain pests, under laboratory conditions, are not easy to use with equal efficiency in field conditions. This is due to both the presence of environmental factors and competition with other organisms in its niche, which can affect its growth, physiology, metabolism and gene expression (Khare and Arora, NK Arora (ed.), Plant Microbes Symbiosis: Applied Facets, Springer India 2015). To overcome these limitations, it is necessary to establish formulations or compositions in media that are capable of maintaining the viability and vigor of living cells, in all stages from production to use. Well formulated bacterial preparations increase the possibility of optimal performance, and their commercial success in the production of agricultural foods (Bashan et al., Plant Soil (2014) 378: 1-33).

From the physical point of view, the compositions in the form of wettable powders have to satisfy the requirements for their application. The low wettability is one of the main difficulties found in the formulations in the form of powders, which leads to the formation of lumps, which produce the obstruction of the nozzles of the spray systems in the field application. Generally, wetting is a process in which the gaseous phase on the surface of the solid phase is replaced by a liquid phase; the three phases coexist for some time, so that a certain amount of intermingling is possible.

In the particular case of spray drying, the content of occluded air can be varied with the operating parameters of the dryer, with the composition of the cream to be dried and with its physical properties. A high viscosity makes it difficult for the air in the cream to come out freely. The high agitation of the tank containing the concentrate helps the formation of air particles inside the formula. The temperature of the cream also helps to coexist more air quantity in the concentrate to be dried. Therefore, it is important to take into account both operating parameters and the composition of the cream to be dried, in order to avoid the formation of a formulation with poor wettability (Bhesh R. Bhandari, et al. (1997), Drying Technology, 15: 2, 671-684). The nematicidal activity of strain C-924 was revealed in patent EP0774906. This strain was classified as *Corynebacterium paurometabolum,* using the API-50 CH reference system, and was deposited in 1995, at the Centraalbureau voor Schimmelcultures (CBS), in Baarn, the Netherlands (Deposit No. CBS 613.95). Subsequently, the broad pesticidal and antiparasitic activity of the same strain C-924, reclassified as *Tsukamurella paurometabola,* was confirmed (Patent EP 1356733), so it has been used in the control of animal and plant parasites. Later, the biofertilizing activity of the same bacterial strain was identified (Patent EP2154121). So far, two formulations of said microorganism, one liquid and one solid, have been used. The liquid formulation has as a disadvantage a lower stability, and the handling of greater volume for its application. The solid formulation used up to now, although it has shown a greater stability than liquid, presents difficulties in wettability, and forming lumps, which negatively affects the applicability in the field.

Therefore, it is necessary to obtain compositions of the mentioned microorganism, with physical properties that facilitate its application in the field, while enhancing its properties as biopesticide and biofertilizer.

### DETAILED DESCRIPTION OF THE INVENTION

The present invention solves the problem raised above, by providing a solid composition, more efficient, of a microorganism with proven properties as biopesticide and biofertilizer. The invention provides a solid composition for agricultural or veterinary use comprising: 1) up to 92.4% of a mixture of a bacterial concentrate of strain C-924 and a culture medium for growth and development of microorganisms or a commercially available organic amendment; 2) from 1.8% to 6.6% of an antifoam substance; 3) from 0.8% to 3% sucrose and 4) less than 12% residual moisture. In said composition, the bacteria (strain C-924) is found between 10¹⁰ colony-forming units (cfu) and 10¹² cfu per gram of solid composition.

Said composition is more effective, since it maintains the stability of the product, and decreases the wettability time. It makes the application of the product more feasible, which increases the soil fertility, and conditions it for a more satisfactory development of the plants cultivated in it; protects the plants from the attack of nematodes and phytopathogenic fungi, and is a control for the gastrointestinal zoonematodes of animals.

As stated above, the strain C-924 that constitutes the active ingredient of the composition of the invention is deposited, by virtue of the Budapest Treaty, with Deposit No. CBS 613.95. The present invention discloses an optimized solid composition, for the control of bacteria, phytopathogenic fungi and nematodes, and the stimulation of plant growth, which comprises said microbial strain. The optimization has been achieved by facilitating resuspendability, for its final application, while the stability of the product was improved. In the invention it is demonstrated that the formulation has a wettability time lower than 10 minutes.

For the purposes of the invention, the term "antifoam substance" is any substance that is used to inhibit or reduce the formation of foam in the microbial fermentation. In an embodiment of the invention the antifoam substance is a mixture of fatty acid esters with copolymers of ethylene oxide-propylene oxide. In a particular embodiment, the antifoam substance is of the Glanapon type, such as the one supplied by Bussetti & Co, GmbH, Austria.

In one embodiment of the invention, the culture medium that forms part of the solid composition is selected from the group consisting of Yeast Extract, Casein Hydrolysate, Peptone and Tryptone. In another embodiment, an organic amendment, such as protein hydrolysates and molasses, forms part of the solid composition. To obtain the solid composition of the present invention, the concentrate of the microorganism of interest (strain C-924) is firstly mixed with a culture medium, or a commercially available organic amendment, commonly used for the growth of microorganisms.

In the context of the invention, "solid composition" is understood as any solid product, resulting from the process of formulation and drying of the biomass harvested from the fermentation process of the microorganism, as a concentrate thereof. An example of solid composition with these characteristics is a wettable powder.

For the formulation of the product, the biomass is obtained by submerged fermentation in a medium rich in amino acids (preferably yeast extract, peptone, tryptone or casein hydrolysate) and carbohydrates (preferably sucrose, glucose or molasses). The culture conditions allow a high density culture and the harvest is carried out at the final stage of the exponential phase, to obtain cells prepared for the subsequent drying stage. The harvest of the biomass is carried out by centrifugation or by microfiltration, performing a wash to eliminate remains of culture media before the stage of formulation of the microbial concentrate, also referred as "cream" in this invention.

Without constituting a limitation to the scope of the invention, in a materialization thereof, the manufacture of the composition was carried out in two stages: a first stage of formulation of a microbial concentrate or cream, and a second stage of spray drying. In the formulation stage, first the culture medium, the sucrose and the antifoam substance were mixed, and a thermal treatment of the mixture was carried out, to reduce the unwanted microbial load, and subsequently the concentrated biomass of the microorganism was added. In a second stage, the formulated cream was dried in a spray dryer, under conditions of inlet and outlet temperatures that ensured a high survival of the microorganism of interest. Finally, the product was packaged under conditions that promote low residual humidity and a low oxygen content, to guarantee the stability of the product.

In another aspect, the invention discloses the use of the solid composition comprising: 1) up to 92.4% of a mixture of a bacterial concentrate of the strain C-924 and a culture medium for the growth and development of microorganisms or a commercially available organic amendment; 2) from 1.8% to 6.6% of an antifoam substance; 3) from 0.8% to 3% sucrose and 4) less than 12% residual humidity; for the control of plant and animal pathogens.

In one embodiment of the invention, the pathogen to be controlled with said solid composition of the strain C-924 is a parasitic nematode. In a particular embodiment, the parasitic nematode belongs to the genera *Meloidogyne, Radopholus, Pratylenchus, Haemonchus, Trichostrongylus* and *Dictiocaulus.*

In another embodiment of the invention, the pathogen to be controlled with said solid composition is a fungus. In a particular embodiment, the fungus is selected from the group consisting of *Alternaria tabacina, Alternaria longipes, Bipolaris oryzae, Collectotrichum gloeosporioides, Fusarium oxysporum, Pestalotia palmarum, Rhizopus stolonifer, Rhizoctonia solani, Sarocladium oryzae* and *Thielaviopsis paradoxa.*

The invention also provides the use of the solid composition comprising: 1) up to 92.4% of a mixture of a bacterial concentrate of the strain C-924 and a culture medium for the growth and development of microorganisms or a commercially available organic amendment; 2) from 1.8% to 6.6% of an antifoam substance; 3) from 0.8% to 3% sucrose; and that possess less than 12% residual humidity, for the stimulation of seed germination and plant growth.

In another aspect, the invention comprises a method for the control of pathogens of plants and animals characterized by the administration to the soil or to the animal in need thereof of an effective amount of the solid composition comprising: 1) up to 92.4% of a mixture of a bacterial concentrate of the strain C-924 and a culture medium for growth and development of microorganisms or a commercially available organic amendment; 2) from 1.8% to 6.6% of an antifoam substance; 3) from 0.8% to 3% sucrose; and that possess less than 12% residual moisture; by an appropriate form of application of the composition to said plant or animal.

For plants an "appropriate form of application of the composition" is defined as all the means by which a suspension of the composition is made available to the root system of the plant, such as automated irrigation systems, or irrigation with sprayers or other instruments. In case of use in animals, the "appropriate form of application of the composition" refers to the supply of the solid composition, or a suspension thereof, as part of the diet or the administration by direct oral route.

It is also part of the invention, a method for the stimulation of seed germination and plant growth characterized by the administration to the seeds or to the plants of an effective amount of the solid composition comprising: 1) up to 92.4% of a mixture of a bacterial concentrate of the strain C-924 and a culture medium for growth and development of microorganisms or a commercially available organic amendment; 2) from 1.8% to 6.6% of an antifoam substance; 3) from 0.8% to 3% sucrose; which possess less than 12% residual humidity, by an appropriate form of application of the composition to said seeds or plants.

For seeds, an "appropriate form of application of the composition" is defined as all the means by which the seeds are contacted with a suspension of the solid composition of the invention. For example, an appropriate form of application of the composition to the seeds is their immersion in said composition.

### BRIEF DESCRIPTION OF THE FIGURES

**Figure 1****.** Variation of dry biomass concentration over time during fermentation of the microbial strain C-924.

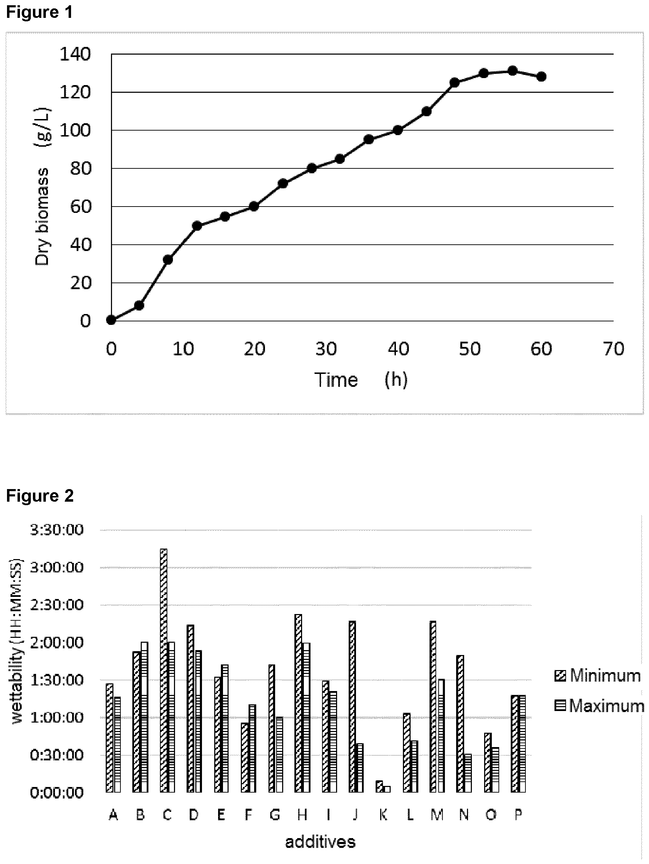

**Figure 2****.** Influence of the addition of different substances on the wettability of the compositions of the microbial strain C-924 and organic matter. The additives used were: A- Acacia Gum, B- Xanthan Gum, C- Tragacanth Gum, D- Sodium Dodecyl Sulfate (SDS), E- Polysorbate 80 (Tween 80), F- Polysorbate 20 (Tween 20), G-Gelatine, H- Sodium Alginate, I- Sucrose, J- Ammonium Sulphate, K- Glanapon DG - 158, L- Soy lecithin, M- Carboxymethylcellulose (CMC), N- Polyethylene Glycol 600 (PEG 600), O-Polyethylene Glycol 8000 (PEG 8000), P- Control (without any additive). Maximum and minimum are the two concentration levels of the evaluated additives.
**Figure 3****.** Influence of the sucrose concentration on the wettability of the compositions of the microbial strain C-924 and organic matter.
**Figure 4****.** Percentage of germination of maize seeds treated with compositions containing the microbial strain C-924, *Azotobacter chrococcum* INIFAT 12 and *Pseudomonas fluorescens* C16, respectively. Control: untreated seeds. Different letters represent statistically significant differences for p < 0.05 according to the Duncan test.

### EXAMPLES

### Example 1. Production of the biomass.

The biomass of the bacterial strain C-924, whose deposit number is CBS 613.95, was obtained by submerged fermentation in a batch system, in culture medium with the following composition: Yeast extract, 59 g/L; Sucrose, 170 g/L; Magnesium sulphate heptahydrate, 4.8 g/L and anti-foam Glanapon DG-158 1 g/L. The fermentation was carried out in a fermenter of 50 L of working volume, at 36 °C, with an agitation of 500 rpm, an aeration of 1.5 liters of air per liter of culture medium, and a pressure in the glass of the fermenter of 1 bar. The culture was maintained for 72 hours, until the total sucrose added was consumed, and subsequently it was left in stationary phase for at least four hours. The microorganism was harvested by centrifugation in a tubular centrifuge, removing the culture supernatant. The biomass obtained was used in the formulation of the cream, or bacterial concentrate, to be dried. In Figure 1 the growth kinetics obtained is shown. By the parameters represented in said figure, a high density growth can be observed, since the values of dry biomass concentration are higher than 100 g/L, which allows a better preparation of the cells, for the subsequent drying process.

### Example 2. Selection of additives to improve the wettability of the composition.

An evaluation of the incidence of different additives in the physical properties of the formulation of the bacterial strain C-924, measured through wettability, was made. The biomass was obtained as described in Example 1. The additives evaluated were: acacia gum, xanthan gum, tragacanth gum, SDS, polysorbate 80 (tween 80), polysorbate 20 (tween 20), gelatin, sodium alginate, sucrose, ammonium sulphate, Glanapon DG-158 (Bussetti & Co, GmbH, Austria), Soy lecithin, Carboxymethylcellulose (CMC), Polyethyleneglycol 600 (PEG 600) and Polyethyleneglycol 8000 (PEG 8000). Compositions with a concentration of the microorganism (bacterial strain C-924) between 8.4% and 9.2% (w/w) and culture medium (yeast extract) between 76% and 85% (w/w) were generated. The additives were added in two concentration levels, one minimum (2.3% (w/w)) and the other maximum (10.5% (w/w)), except for xanthan gum. For this compound, the minimum value was 0.23% and the maximum value was 1.2% (w/w); due the high viscosity that this additive gives to the cream or concentrate formulated to dry. As a control, a formulation without additives was used, with a composition of 9.5% (w/w) of biomass and 85.5% (w/w) of yeast extract. The formulated creams were dried in a spray dryer, preheating in line, by means of a heat exchanger at 37 ± 1 °C, and dried at an inlet temperature of 130 ± 2 °C, and an outlet temperature between 60 °C and 62 °C. The obtained compositions were packed in three-layer material (Polyethylene, Aluminum and Polyester) by a vacuum sealer. The residual moisture of the compositions, after drying, averaged 5%. In response, the wettability of the compositions was evaluated, determined by the method described by the *Collaborative International Pesticides Analytical Council* (CIPAC) in CIPAC MT53.3. Figure 2 shows that, surprisingly, the addition of the antifoam Glanapon DG-158, in the two studied concentrations (2.3% and 10.5%), decreases the wettability time of the composition, below 10 minutes, which significantly favors the physical properties of the composition, and therefore its applicability for existing irrigation systems.

### Example 3. Influence of Glanapon DG-158 concentration on the wettability of the composition.

To evaluate the influence of the concentration of Glanapon DG-158 on the wettability of the composition, two experiments were carried out, one in the presence and the other in the absence of organic matter, in addition, the concentration of anti-foaming agent Glanapon DG-158 was varied between 0 and 6.6%. The yeast extract was included in the formulation of the first experiment. This was done with a concentration of 23.5% of dry biomass, 67.1 % of yeast extract, 1.1 % of sucrose, and Glanapon DG-158 was between 0 and 6.6%. The composition of the second experiment did not include yeast extract, and had a concentration of 90.6% of dry biomass, 1.1% of sucrose, and Glanapon DG-158 between 0 and 6.6%. The biomass was obtained as described in Example 1. The drying process was carried out as described in Example 2, using an outlet temperature of 80 °C. The response variable measured was wettability, according to the CIPAC MT53.3 technique. Table 1 shows the results obtained in the first experiment, where yeast extract was included in the formulation. The results obtained show that, from a Glanapon DG-158 concentration equal to or greater than 1.8% a wettability of less than 1 minute is achieved.

**Table 1. Effect of the concentration of Glanapon DG-158 on the wettability of the composition including yeast extract.**

| **Concentration of Glanapon DG-158 (%)** | **Wettability** |
|---|---|
| | **(HH:MM:SS)** |
| 0.5 | 0:07:00 (b)* |
| 1 | 0:16:12 (a) |
| 1.8 | 0:00:22 (c) |
| 3.5 | 0:00:20 (c) |
| 5 | 0:00:19 (c) |
| 6.6 | 0:00:18 (c) |

| | |
|---|---|
| *Different letters represent statistically significant differences in wettability values (simple classification ANOVA, Student Newman Keuls test p <0.05). Wettability is expressed as wettability time, in hours: minutes: seconds (HH: MM: SS). | |

Table 2 shows the results obtained in the second experiment, where no yeast extract was included in the formulation. The collected results show that from a concentration of Glanapon DG-158 equal to or greater than 1.8% a wettability of less than 10 minutes is achieved.

**Table 2. Effect of the concentration of Glanapon DG-158 on the wettability of the composition without yeast extract.**

| **Concentration of Glanapon DG-158 (%)** | **Wettability** |
|---|---|
| | **(HH:MM:SS)** |
| 0 | 1:40:00 (a)* |
| 1 | 0:15:00 (b) |
| 1.8 | 0:07:48 (c) |
| 2.5 | 0:02:09 (d) |
| 3 | 0:00:36 (e) |
| 4 | 0:00:24 (e) |
| 5 | 0:00:12 (e) |
| 6.6 | 0:00:09 (e) |

| | |
|---|---|
| *Different letters represent statistically significant differences in wettability values (simple classification ANOVA, Student Newman Keuls test p <0.05). Wettability is expressed as wettability time, in hours: minutes: seconds (HH: MM: SS). | |

The results obtained in both tables show that a Glanapon DG-158 concentration equal to or greater than 1.8% reduces the wettability time below 10 minutes, this time is shorter when the yeast extract is present in the formulation. When compositions with a concentration of Glanapon DG-158 greater than 6.6% are prepared a decrease in the fluidity of the powder obtained was appreciated, this is detrimental to the physical properties of the product.

### Example 4. Influence of the sucrose concentration on the wettability of the solid composition.

The influence of the sucrose concentration on the wettability of the product was evaluated. Different variants of cream to be dried were prepared, with a base composition of 23.5% of dry biomass, 2% of Glanapon DG-158, 67% of yeast extract, sucrose between 0 and 3.3%. The biomass was obtained as described in Example 1. The creams were prepared at a total solid concentration of 40%. Drying was carried out in a spray dryer, with an inlet temperature of 130 ± 2 °C, and an outlet temperature of 80 °C. The response variable measured was wettability, according to the CIPAC MT53.3 technique.

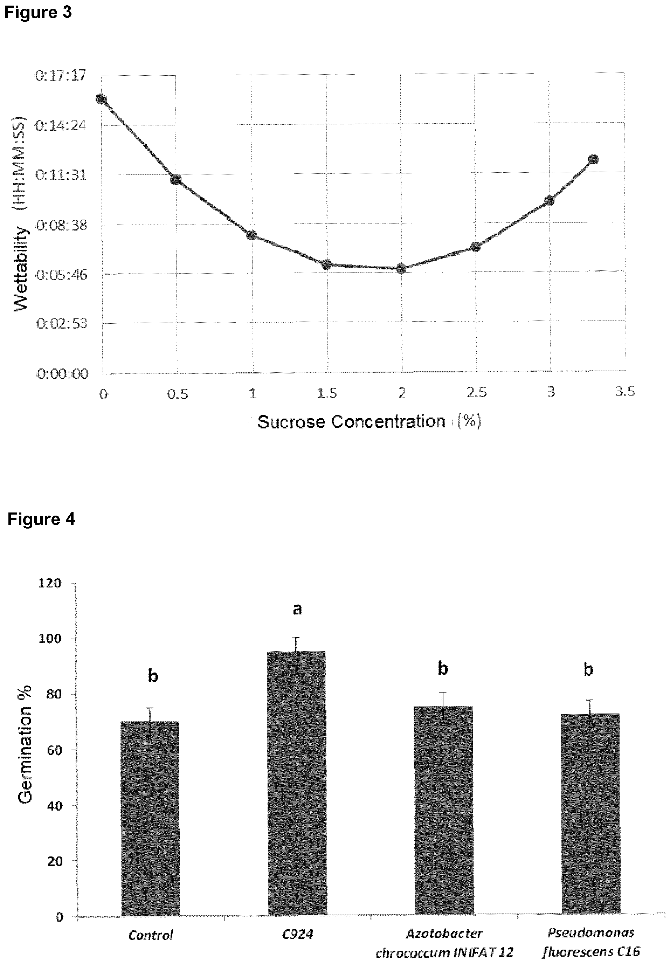

Figure 3 shows that, with a sucrose concentration between 0.8 and 3%, a wettability lower than 10 minutes is achieved, this is the desired time for this type of product.

### Example 5. Preparation of compositions for biological activity assays.

The cream to be dried, containing bacteria of strain C-924, was prepared at a total solid concentration equal to 30%. The yeast extract and the sucrose were first added to the creams, in the quantities required for each formulation to be prepared, and 15% of the total volume of Glanapon DG-158 to be used in each formulation, in a volume of process water that made possible the addition of the obtained wet biomass. The obtained mixtures were homogenized in a stirred tank with temperature control. They were heated at 95 °C for one hour. Subsequently, they were cooled to a temperature below 15 °C. When said temperature was reached, the wet biomass obtained and the rest of the Glanapon DG-158 were added to each formulation, and it was kept under stirring for at least one hour.

The mixtures obtained were dried in a spray dryer. For this, the mixture to be dried was pre-heated in line, by means of a heat exchanger at 37 ± 1 °C, and dried at an air inlet temperature of 130 ± 2 °C and an outlet temperature of 80 °C. The place where the product was unloaded had a relative humidity less than 55% and a temperature between 22 °C and 26 °C. The obtained compositions were packed in three-layer material (Polyethylene, Aluminum, Polyester), in a vacuum sealer.

The final compositions of the prepared formulations were:
- Formulation 1: Control without microorganism. Dry biomass 0%; Yeast extract 90.4%, Sucrose 1.4%, Glanapon DG-158 3.2%.
- Formulation 2: Dry biomass 2.3%; Yeast extract 88.2%, Sucrose 1.4%, Glanapon DG-158 3.2%.
- Formulation 3: Dry biomass 4.5%; Yeast extract 85.9%, Sucrose 1.4%, Glanapon DG-158 3.2%.
- Formulation 4: Dry biomass 22.6%; Yeast extract 67.8%, Sucrose 1.4%, Glanapon DG-158 3.2%.
- Formulation 5: Dry biomass 45.2%; Yeast extract 45.2%, Sucrose 1.4%, Glanapon DG-158 3.2%.
- Formulation 6: Dry biomass 90.4%; Yeast Extract 0%, Sucrose 1.4%, Glanapon DG-158 3.2%.

Residual moisture was always 5%. The compositions obtained fulfilled the following concentration ranges of each component: mixture of Yeast Extract and dry biomass less than or equal to 92.4%; Glanapon DG-158 between 1.8% and 6.6%; sucrose between 0.8% and 3%; water (residual moisture) below 12%. The microorganism used, consisting of the bacterial strain C-924, was in a concentration between 10¹⁰ and 10¹² cfu / gram of composition.

### Example 6. In vitro evaluation of the nematicidal effect of compositions of the microbial strain C-924.

A procedure was carried out at the laboratory level, to evaluate the nematicidal effect of compositions containing strain C-924, where the ratio organic matter/microorganism was variable. Yeast extract was used as organic matter. The compositions employed in this experiment are those described in Example 5. As an *in vitro* activity criterion, the inhibition of egg hatching and mortality of juveniles for each of the compositions was evaluated. This evaluation was carried out on different nematode species.

The specimens were extracted from the roots of plants infested with phytonematodes (*Meloidogyne incognita, Radopholus similis* and *Pratylencus coffeae*); from abomasum of ruminants (*Haemonchus contortus* and *Trichostrongilus colubriformis*) and from lungs of sheep (*Dictyocaulus viviparus*) infested with zoonematodes. The specimens were placed in 1% sodium hypochlorite solution for 3 minutes, and then washed 3 or 4 times with sterile deionized water to remove the remains of the hypochlorite. Juveniles were obtained from eggs incubated at 28 °C in sterile deionized water for 2 to 6 days. The samples were prepared shortly before developing the trials, which were performed in sterile culture plates of 24 wells. Hundred eggs (or 100 juveniles) were placed on average per well.

To know the effect of each composition of strain C-924, in all cases they were suspended initially in deionized water, the bacteria were harvested by centrifugation, washed and suspended in water - 1% peptone, until reaching a cell density of 5x10⁴ cfu/well.

Once the eggs were placed, the plates were observed under a microscope and the possible presence of juveniles was verified in each well. To each well, a volume of 0.1 ml of each formulation was added and the volume was completed up to 1 ml with sterile deionized water. The controls were placed on a separate plate. These contained the same number of eggs or juveniles, in water - peptone only. Three replicas were placed in each case.

In the activity test on eggs; the evaluation was carried out at 96 hours, counting the juveniles emerged during this time in each well, under the microscope. The percentage of egg hatching was calculated having into account the total number of eggs placed at the beginning of the test, and the percentage of hatching inhibition of each treatment was determined regarding the hatching percentage of composition 1, used as a control.

In the activity test on juveniles; the evaluation was made after 72 hours of incubation. Subsequently, the juveniles were transferred to sterile deionized water and incubated for further 24 hours, before performing the final count of the number of live and dead juveniles, under the microscope. In this test the survival of the juveniles was calculated after the end of the test, and the reduction thereof was determined, regarding the one caused by the control formulation.

In both trials, the criterion for selecting the most effective compositions was the increase in the inhibition of egg hatching, and the reduction of juvenile survival by 50% or more. The results of the evaluation of the inhibition of egg hatching are shown in Table 3. The values represent the average of three replicas.

**Table 3. Inhibition of the hatching of nematode eggs by different compositions of the microbial strain C-924.**

| | **Composition** | | | | | |
|---|---|---|---|---|---|---|
| **Nematode species** | 1 | 2 | 3 | 4 | 5 | 6 |
| *Haemonchus contortus* | 2.8% **(a)*** | 27% (b) | 63.2% (c) | 99% **(e)** | 95% **(e)** | 84.8% (d) |
| *Trichostrongilus colubriformis* | 13.1% **(a)** | 45.4% (b) | 68% **(c)** | 98.5% **(e)** | 93% **(e)** | 81.5% (d) |
| *Dictyocaulus viviparus* | 37.3% (a) | 50.1% (b) | 74.2% **(c)** | 97.6% (d) | 96.2% (d) | 95% (d) |
| *Meloidogyne incognita* | 2.6% **(a)** | 39.9% (b) | 78% (c) | 99.2% (d) | 98.7% (d) | 96.2% (d) |
| *Radopholus similis* | 4.1% | 47% | 75.5% | 98.7% | 96% | 93.2% |
| | (a) | (b) | (c) | (e) | (e) | (d) |
| *Pratylencus coffeae* | 10% | 41.2% | 70.2% | 99.5% | 97.5% | 95.5% |
| | (a) | (b) | (c) | (e) | (d) | (d) |

| | | | | | | |
|---|---|---|---|---|---|---|
| *Values with different letters represent statistically significant differences (simple classification ANOVA, Student Newman Keuls test p <0.05) | | | | | | |

For inhibition of egg hatching, compositions 3, 4, 5 and 6 demonstrated control above 50%, both for zoonematodes and for phytonematodes. The best results were obtained with composition 4. On the other hand, the results of the evaluation of juvenile mortality are shown in Table 4.

**Table 4. Mortality of juveniles caused by different compositions of strain C-924.**

| | **Composition** | | | | | |
|---|---|---|---|---|---|---|
| **Nematode species** | 1 | 2 | 3 | 4 | 5 | 6 |
| *Haemonchus contortus* | 7.9% | 22.5% | 58.7% | 84.7% | 69.9% | 67% |
| | (a)* | (b) | (c) | (e) | (d) | (d) |
| *Trichostrongilus colubriformis* | 17.5% | 26.8% | 60.7% | 88.1% | 71.2% | 57.8% |
| | (a) | (b) | (c) | (d) | (c,d) | (c) |
| *Dictyocaulus viviparus* | 22.8% | 33.7% | 54.9% | 91.5% | 77.5% | 60.4% |
| | (a) | (b) | (c) | (e) | (d) | (c) |
| *Meloidogyne incognita* | 8.5% | 35.2% | 67.4% | 98.2% | 79% | 62.3% |
| | (a) | (b) | (c) | (e) | (d) | (c) |
| *Radopholus similis* | 6.3% | 25.8% | 65% | 90.8% | 74.3% | 60% |
| | (a) | (b) | (c) | (e) | (d) | (c) |
| *Pratylencus coffeae* | 10.2% | 30% | 61.9% | 88.1% | 71.2% | 59.6% |
| | (a) | (b) | (c) | (e) | (c,d) | (c) |

| | | | | | | |
|---|---|---|---|---|---|---|
| *Values with different letters represent statistically significant differences (simple classification ANOVA, Student Newman Keuls test p <0.05) | | | | | | |

For juvenile mortality, also compositions 3, 4, 5 and 6 fulfilled the criterion of causing more than 50% of dead juveniles. In this case, composition 4 was the one that showed the greatest effectiveness.

### Example 7. In vivo evaluation of the nematicidal effect of compositions of the microbial strain C-924.

### A) Pot controlled conditions

The nematicidal activity of the compositions, against *Meloidogyne incognita,* was determined under *in vivo* conditions (pots of 1 kg capacity). The compositions used in this experiment were those described in Example 5. Tomato plants of the variety UC 8213, susceptible to the attack of phytonematodes, were used. Fifty plants were used for each composition. A 1:1 mixture of sterile sand and peat was used as substrate, which was infested with an amount of 1000 nematode eggs per each pot, three days before the first application of the compositions. An amount of 6.25 g of each solid composition was weighed and suspended in 5 L of water. Hundred milliliters were applied per pot. In the treatments, the applications of the compositions were carried out three times. The first application was made seven days before the transplant of the seedlings, the second application was made 14 days after the transplant, and the third one was conducted 21 days after the second application.

Forty days after the seedlings were planted; the damage caused to the roots by attack of nematodes was evaluated, using the scale of infestation degrees of Bridge and Page (Tropical Pest Management Vol. 26, Iss. 3, 1980). The values of the infestation degree of the plants treated with each composition were compared statistically. The results obtained are shown in Table 5.

**Table 5. Infestation degree by attack of the nematode Meloidogyne incognita tomato plant roots.**

| **Treatment** | **Infestation degree** |
|---|---|
| Composition 1 | 6.73 (a)* |
| Composition 2 | 5.88 (a) |
| Composition 3 | 3.53 (b) |
| Composition 4 | 1.50 (d) |
| Composition 5 | 1.76 (d) |
| Composition 6 | 2.04 (c) |

| | |
|---|---|
| *Values with different letters represent statistically significant differences (simple classification ANOVA, Student Newman Keuls test p <0.05) | |

According to the results obtained in the nematicidal activity test in pots, it was demonstrated that compositions 3, 4, 5 and 6 caused less damage by nematode attack in the roots, with statistically significant differences if compared to plants that received the other formulations. Plants treated with compositions 4 and 5 were those that showed highest levels of protection against attack by the pest.

### B) Field conditions

The nematicidal activity of the compositions under study was determined in conditions of a protected crop house of 0.1 ha. The initial infestation of the soil was evaluated, from random sampling and planting of indicator plants. A protected crop house with a high level of initial infestation, equal to or greater than 7 was selected, according to the results of the Bridge and Page scale. Plants of the tomato hybrid named 3019, susceptible to the attack of nematodes, were used. The compositions were applied following a random block design. Concentrated solutions of each composition were prepared, suspending 500 g of each composition in 50 L of water. From these suspensions, 1:8 dilutions were prepared before application in each block, and 100 mL were applied to the area where the transplant of each seedling would be performed in the first application. In the second and third application, between 200 mL and 300 mL of said dilution per plant were supplied, depending on the development of the plant. The application scheme was similar to that used in the trial under pot conditions: one application seven days before transplanting the seedlings on the furrow, the second application was made 14 days after the transplant, and the third one was 21 days after the second application. Root damage was evaluated in the total number of plants treated with each formulation, by the Bridge and Page scale, at 70 days of cultivation. The damage values were statistically compared. The harvest yield in each treatment was also evaluated, from the total weight of the fruits (at the end of the cultivation cycle, 125 days). The results obtained are shown in Table 6.

**Table 6. Infestation degree in tomato plant roots attacked by the nematode Meloidogyne incognita.**

| **Treatment** | **Infestation degree** | **Yields (t/ha)** |
|---|---|---|
| Composition 1 | 9.2 (a)* | 1.93 |
| Composition 2 | 7.8 (b) | 21.84 |
| Composition 3 | 6.1 (c) | 24.12 |
| Composition 4 | 4.6 (d) | 35.22 |
| Composition 5 | 5.2 (c) | 32.10 |
| Composition 6 | 5.4 (c) | 28.20 |

| | | |
|---|---|---|
| *Values with different letters represent statistically significant differences (simple classification ANOVA, Student Newman Keuls test p <0.05) | | |

In the trial under field conditions, compositions 4, 5 and 6 exhibited the greatest control of damage by nematode attack. In the case of composition 4, the degree of infestation caused was 50% of the one caused in the plants that received the formulation 1. There is also coincidence between these results and those obtained in terms of yields, where composition 4 allowed obtaining 1725% more fruit than formulation 1, used as control.

### Example 8. Assessment of the activity of compositions containing the bacterial strain C-924 against phytopathogenic fungi.

An activity test against phytopathogenic fungi was carried out on Petri dishes with solid culture medium. Inoculation of the fungi was carried out when the medium was still liquid (temperature close to 40 °C). Once the medium was solidified, discs of filter paper, moistened in a suspension of 1 mg/mL of each composition, were placed in the center of each plate and incubated at 30 °C. The compositions employed in this experiment are described in Example 5. Three Petri dishes were used for each treatment. After 5 days, the inhibition zones of each treatment were evaluated, and the values of those corresponding to the same composition by fungus type were averaged. The results obtained are shown in Table 7.

**Table 7. Inhibition on phytopathogenic fungi by the compositions containing strain C-924.**

| | **Inhibition halo (mm)** | | | | | | | | | |
|---|---|---|---|---|---|---|---|---|---|---|
| **Composition** | A | B | C | D | E | F | G | H | I | J |
| 1 | 0.0 | 0.0 | 0.0 | 0.0 | 0.0 | 0.0 | 0.0 | 0.0 | 0.0 | 0.0 |
| 2 | 1.5 | 3.5 | 0.0 | 0.0 | 2.5 | 0.0 | 1.5 | 0.0 | 1.0 | 0.0 |
| 3 | 12.5 | 10.5 | 2.5 | 2.0 | 4.0 | 3.0 | 4.0 | 3.0 | 6.0 | 4.0 |
| 4 | 19.0 | 20.0 | 15.0 | 15.0 | 15.5 | 15.5 | 14.5 | 18.0 | 15.5 | 14.0 |
| 5 | 17.0 | 15.0 | 14.0 | 14.5 | 13.5 | 13.0 | 12.5 | 16.5 | 14.5 | 13.5 |
| 6 | 18.0 | 18.0 | 15.0 | 13.5 | 13.5 | 15.5 | 13.0 | 17.0 | 15.0 | 13.0 |

| | | | | | | | | | | |
|---|---|---|---|---|---|---|---|---|---|---|
| *A) Alternaria tabacina B) Alternaria longipes C) Bipolaris oryzae D) Collectotrichum gloeosporioides E) Fusarium oxysporum F) Pestalotia palmarum G) Rhizopus stolonifer H) Rhizoctonia solani I) Sarocladium oryzae J) Thielaviopsis paradoxa* | | | | | | | | | | |

With these results, the antagonistic activity of solid compositions containing the strain C-924, on all the phytopathogenic fungi that appear in Table 7, is demonstrated. In particular, compositions 4, 5 and 6 generated greater halos of growth inhibition on the phytopathogenic fungi.

### Example 9. Demonstration of the stability of the composition with the greatest biological activity.

The satisfactory results obtained in the biological activity experiments led to a real-time stability study of eight lots manufactured with composition 4; consisting of 22.6% dry biomass; Yeast extract 67.8%; Sucrose 1.4%; Glanapon DG-158 3.2% and residual humidity of 5%. The outlet temperature of the spray dryer was 80 °C. The batches were stored between 2 °C to 8 °C of temperature. The indicators of the stability of the batches were analyzed at the beginning and at different times of manufacture, until completing the 24 months of storage.

It was shown that the composition containing dry biomass 22.6%; yeast extract 67.8%; 1.4% sucrose; Glanapon DG-158 3.2%; and a residual humidity of 5% maintained a stability of at least 24 months in shelf, at a temperature between 2 °C and 8 °C, which is observed in Table 8.

**Table 8. Stability of batches at storage temperature between 2 °C and 8 °C.**

| **Indicator** | **0 months** | **6 months** | **12 months** | **18 months** | **24 months** |
|---|---|---|---|---|---|
| Viability count (x10¹¹ cfu) | 16.9 ±4.0 | 7.36 ± 0.60 | 4.48 ± 0.70 | 2.32 ± 0.70 | 1.48 ± 0.60 |
| Suspendibility (%) | 100 | 100 | 100 | 99 | 99 |
| Wettability (HH:MM:SS) | 0:03:30 ± 0:00:48 | 0:05:03 ± 0:00:42 | 0:04:03 ± 0:00:54 | 0:04:35 ± 0:00:48 | 0:05:31 ± 0:00:55 |

| | | | | | |
|---|---|---|---|---|---|
| Wettability is expressed as wettability time, in hours: minutes: seconds (HH:MM:SS). | | | | | |

### Example 10. Demonstration of the biofertilizing capacity of the composition with the highest biological activity.

To check the biofertilizing activity, in corn plants, of the solid composition of strain C-924 that showed the greatest effect against nematodes and fungi (formulation 4), soil inoculation was done seven days before and seven days after planting the seedlings.

The wettable powder, resulting from the formulation, was suspended at a concentration of 10⁸ cfu/mL. The volume applied was 100 mL per pot. As a positive control, plants treated with the plant growth stimulating bacteria *Pseudomonas fluorescens* C16 and *Azotobacter chroococcum* INIFAT 12 were used. As a negative control, non-inoculated plants were used. The number of replicas was 20 plants per treatment. The seeds were sown at the rate of one seed per nest, four nests per pot and at a depth of three centimeters, in pots of 1 dm³ of volume.

The bacteria *P. fluorescens* C16 (at a concentration of 2.7 x 10¹⁰ cfu/mL) and A. *chroococcum* INIFAT 12 (at a concentration of 4.5 x 10¹⁰ cfu/mL) were applied at the time of sowing. Both strains were used in a solid mixture of the bacterial solution with previously sieved humus, at a dose of 2 kg/ha.

Evaluated variables were:
- Percent of seeds germinated seven days after sowing.
- Height of the plants from the neck of the root to the leaf flag axils (in cm, measured 7 days and 35 days after planting of the plants).
- Diameter of the stem of the plants at 2 cm height of the stem (in mm).

As it can be seen in Figure 4, seven days after the seeds were sown, the highest germination percentage (95.6%) was obtained in the plants treated with the selected C-924 solid composition. For the rest of the treatments (plants inoculated with A. *chrococcum* INIFAT 12 or *P. fluorescens* C16), values similar to those of the control without inoculation were obtained.

For the variable "plant height", the best results (with statistically significant differences) were obtained with the use of the solid composition containing C-924, which is observed in Table 9.

**Table 9. Height of inoculated corn plants.**

| | 7 días | 35 días |
|---|---|---|
| UNTREATED Control | 11.73 ^{b} | 72.41 ^{c} |
| Composition with C-924 | 14.15 ^{a} | 83.40 ^{a} |
| *A. chroococcum* INIFAT 12 | 11.82 ^{b} | 76.53 ^{b} |
| *P. fluorescens* C16 | 13.03 ^{a} | 78.64 ^{b} |
| Standard error | 0.667* | 1.825* |

| | | |
|---|---|---|
| Different letters represent statistically significant differences for p< 0.05 according to Tukey's multiple range test. The height of the plants (in cm) was measured at 7 and 35 days after planting of plants. | | |

Regarding the diameter of the stem, during the first three weeks of the experiment, there were no differences between the plants, including the control (Table 10). After 28 days, it was found that in the variant where the solid composition of C-924 was present, the best values for this variable were obtained. These values were higher (with statistical significance) than those obtained in the control without inoculation, and in plants treated with the plant growth stimulating bacteria, used as a positive control, which were similar to each other.

**Table 10. Stem diameter of inoculated corn plants.**

| | 7 days | 21 days | 28 days | 35 days |
|---|---|---|---|---|
| control | 2.46 | 4.54 | 7.0 ^{b} | 8.67 ^{b} |
| C-924 | 2.25 | 4.58 | 8.09 ^{a} | 10.52 ^{a} |
| *A. chroococcum* INIFAT 12 | 2.33 | 4.00 | 6.43 ^{b} | 8.85 ^{b} |
| *P. fluorescens* C16 | 2.33 | 4.31 | 6.61 ^{b} | 8.66 ^{b} |
| Standard error | 0.132 ^{n.s} | 0.245 ^{n.s.} | 0.311* | 0.713* |

| | | | | |
|---|---|---|---|---|
| Different letters differ significantly from each other for p < 0.05 according to Tukey's multiple range test. The diameter was measured at 7, 21, 28 and 35 days after planting. | | | | |

With these results it is concluded that the composition containing C-924 has biofertilizing activity, by stimulating seed germination and growth, evaluated by the height and thickness of the stem of the plants.

### Example 11. Evaluation of the nematicidal effect of compositions of strain C-924 with several microorganism culture media.

The nematicidal activity, against *Meloidogyne incognita,* of compositions similar to formulation 4 of Example 5 was determined *in vivo.* This composition 4 was chosen because it has the best results regarding nematicidal, fungicidal and growth-promoting activity. The similar compositions evaluated in this experiment comprised different culture media of microorganisms and were the following:
- Composition 4A (Control): Dry biomass 22.6%; Yeast Extract 67.8%, Sucrose 1.4%, Glanapon DG-158 3.2%
- Composition 4B: Dry biomass 22.6%; Casein hydrolysate 67.8%, Sucrose 1.4%, Glanapon DG-158 3.2%
- Composition 4C: Dry biomass 22.6%; Peptone 67.8%, Sucrose 1.4%, Glanapon DG-158 3.2%
- Composition 4D: Dry biomass 22.6%; Tryptone 67.8%, Sucrose 1.4%, Glanapon DG-158 3.2%
- Composition 4E (Control without microorganism): Dry biomass 0%; Yeast extract 90.4%, Sucrose 1.4%, Glanapon DG-158 3.2%

All the compositions had a residual moisture of 5%. Tomato plants of the variety UC 8213, susceptible to the attack of the phytonematodes, were used. Fifty plants were used for each composition. As a substrate, a 1:1 mixture of sterile sand and peat was used, which was infested with an amount of 1000 eggs per pot, three days before the first application of the compositions. An amount of 6.25 g of each of the solid compositions was weighed and suspended in 5 L of water. They were applied at a rate of 100 mL per pot. The applications of the compositions were made three times: the first at seven days before the transplant of the seedlings, the second at 14 days after the sowing, and the last application at 21 days after the second one. After 40 days of planting, the damage caused by attack of the nematodes to the roots was evaluated, using the scale of degrees of infestation of Bridge and Page. The values of the infestation gradology of the plants treated with each composition were statistically compared. The results obtained after 40 days of seedling planting are shown in Table 11.

**Table 11. Root infestation due to attack of nematodes in plants under pot conditions.**

| **Treatment** | **Infestation degree** |
|---|---|
| Composition 4A | 1.53 (b) |
| Composition 4B | 2.18 (b) |
| Composition 4C | 2.30 (b) |
| Composition 4D | 1.93 (b) |
| Composition 4E | 6.80 (a) |

| | |
|---|---|
| Values with different letters represent statistically significant differences (simple classification ANOVA, Student Newman Keuls test p <0.05) | |

According to the results obtained in this nematicidal activity test in pots, it was demonstrated that the application of the compositions 4A, 4B, 4C and 4D resulted in a lower affectation by attack of nematodes in the roots, with statistically significant differences, if compared to the plants treated with the composition without the microorganism (4E). There were no differences in activity between the compositions of C-924 tested, regardless of the culture medium used.

## Claims

1. A solid composition for agricultural or veterinary use comprising 1) up to 92.4% of a mixture of a bacterial concentrate of strain C-924 and a culture medium for the growth and development of microorganisms or a commercially available organic amendment; 2) from 1.8% to 6.6% of an antifoam substance; 3) from 0.8% to 3% of sucrose and 4) less than 12% of residual moisture, and where the bacteria is found between 10¹⁰ colony-forming units (cfu) and 10¹² cfu per gram of solid composition.

2. The composition according to claim 1 wherein the antifoam substance is a mixture of fatty acid esters with copolymers of ethylene oxide-propylene oxide.

3. The composition according to claim 2 wherein the antifoam subsance is of the Glanapon type.

4. The composition according to claim 1 wherein the culture medium is selected from the group consisting of yeast extract, casein hydrolysate, peptone and tryptone.

5. The composition according to claim 1 wherein the commercially available organic amendment is protein hydrolysate or molasses.

6. Use of the solid composition of claims 1 to 5 for the control of plant and animal pathogens.

7. The use according to claim 6 wherein the pathogen is a parasitic nematode.

8. The use according to claim 7 wherein the parasitic nematode belongs to the genera *Meloidogyne, Radopholus, Pratylenchus, Haemonchus, Trichostrongylus* and *Dictiocaulus.*

9. The use according to claim 6 wherein the pathogen is a fungus.

10. The use according to claim 9 wherein the fungus is selected from the group consisting of *Alternaria tabacina, Alternaria longipes, Bipolaris oryzae, Collectotrichum gloeosporioides, Fusarium oxysporum, Pestalotia palmarum, Rhizopus stolonifer, Rhizoctonia solani, Sarocladium oryzae and Thielaviopsis paradoxa.*

11. Use of the solid composition of claims 1 to 5 for the stimulation of seed germination and plant growth.

12. A method for the control of plant and animal pathogens **characterized by** the administration of an effective amount of the solid composition of claims 1 to 5 to a plant or animal in need thereof by an appropriate form of application of the composition to said plant or animal.

13. A method for the stimulation of seed germination and plant growth **characterized by** the administration of an effective amount of the solid composition of claims 1 to 5 to the seeds or plants, by an appropriate form of application of the composition to said seeds or plants.
